# EUROPÄISCHE PATENTSCHRIFT

(11) **EP 4 490 020 B1**
(45) Veröffentlichungstag und Bekanntmachung des Hinweises auf die Patenterteilung: **08.07.2026**
(21) Anmeldenummer: 23709670.6
(22) Anmeldetag: 06.03.2023
(51) Int. Cl.: B62D 25/14, B62D 27/02

(54) **VERFAHREN ZUM VERBINDEN VON ZWEI ROHREN EINES QUERTRÄGERS**
METHOD FOR CONNECTING TWO TUBES OF A CROSS MEMBER
PROCÉDÉ DE LIAISON DE DEUX TUBES D'UNE TRAVERSE

(30) Priorität: 10.03.2022 DE 102022105629
(43) Veröffentlichungstag der Anmeldung: 15.01.2025
(73) Patentinhaber: Linde + Wiemann SE & Co. KG, 35683 Dillenburg (DE)
(72) Erfinder: NEUL, Daniela, 35638 Leun (DE); ZEISER-RASUMAK, Alex, 35037 Marburg-Ockershausen (DE); FUSS, Dennis, 34537 Bad Wildungen (DE)
(74) Vertreter: Weckenbrock, Matthias
(86) Internationale Anmeldenummer: PCT/EP2023/055545
(87) Internationale Veröffentlichungsnummer: WO 2023/169973

(56) Entgegenhaltungen:
- EP-B1- 2 470 412
- DE-A1- 102018 126 040
- DE-B4- 102008 045 914

## Beschreibung

Die Erfindung betrifft ein Verfahren zum Verbinden von zwei Rohren eines Querträgers eines Fahrzeugs nach dem Oberbegriff des Anspruches 1.

Ein solcher Querträger kann als Teil einer Kraftfahrzeugkarosserie zwischen den so genannten A-Säulen des Kraftfahrzeugs im Bereich unterhalb der Windschutzscheibe, etwa horizontal verlaufend, angeordnet sein. Der Querträger dient in der Regel zur Befestigung einer Instrumententafel, wobei der Querträger die Instrumententafel außerdem versteift.

Zusätzlich zur Aussteifung der Instrumententafel muss der Querträger aufgrund seiner Funktion als Karosseriebestandteil eine hohe Biegesteifigkeit besitzen, welche auch zur höheren Sicherheit des Kraftfahrzeuges und zu einem Schutz der Fahrzeuginsassen bei einem Unfall beiträgt.

Gattungsgemäße Querträger können aus einem durchgehenden Rohr gefertigt sein. Es ist aber auch denkbar, dass vom Fahrzeugtyp abhängige bauliche Gegebenheiten es erforderlich machen, den Querträger aus einer Mehrzahl von Rohren aufzubauen, die fest miteinander verbunden werden müssen. Es ist denkbar, den Querträger aus mehreren Rohren herzustellen, die unterschiedliche Querschnittsgrößen und/oder -formen aufweisen.

Wenn der Querträger eine Rohranordnung aufweist, die aus mehreren Rohren zusammengefügt ist, besteht grundsätzlich ein Problem in der biegesteifen Verbindung der einzelnen Rohre miteinander.

Eine Möglichkeit zum Verbinden zweier Rohre besteht darin, die beiden Rohre einander teilweise überlappend nebeneinander anzuordnen, so dass sich die Rohre im Überlappbereich berühren, und die beiden Rohre im Überlappbereich aneinanderzuschweißen. Wenn die beiden Rohre im Querschnitt rund sind, besteht jedoch das Problem, dass sich die beiden Rohre im Überlappbereich nur entlang einer Mantellinie berühren, und die Verbindung der beiden Rohre entsprechend auf eine linienförmige Schweißnaht begrenzt ist. Eine solche Verbindung der beiden Rohre ist jedoch nicht hinreichend biegesteif.

Um bei einer solchen Verbindungstechnik eine höhere Biegesteifigkeit zu erreichen, könnte der Überlappbereich in Längsrichtung vergrößert werden, was jedoch wegen der größeren erforderlichen Länge der beiden Rohre zu einem erhöhten Materialaufwand und damit zu einem höheren Gewicht der Rohranordnung führt, was insbesondere bei einer Verwendung der Rohranordnung für einen Querträger in einem Kraftfahrzeug unerwünscht ist.

Eine andere Möglichkeit der Verbindung der beiden Rohre der Rohranordnung besteht darin, im Überlappbereich der beiden Rohre ein Blech anzuordnen, das sich quer zur Längsrichtung der beiden Rohre erstreckt und an beiden Rohren angeschweißt wird, und vom jeweiligen Ende des einen Rohres zum anderen Rohr ein Knotenblech anzuordnen, das sich in Längsrichtung der Rohre erstreckt. Die Knotenbleche erhöhen zwar die Biegesteifigkeit der Verbindung der beiden Rohre, haben jedoch den Nachteil, dass sie im Falle der Verwendung der Rohranordnung für einen Querträger die Anbringung weiterer Strukturteile des Querträgers, insbesondere Anbindungselemente, bspw. für die Instrumententafel, im Bereich der Verbindung der beiden Rohre stören. Darüber hinaus ist aufgrund dieser Verbindungstechnik und der damit einhergehenden Zwangslage der Rohre ein Toleranzausgleich nicht möglich.

Die DE 10 2018 126 040 A1 betrifft eine Verbindungshülsenanordnung zum Verbinden von rohrförmigen Querträgern in einem Fahrzeug, insbesondere eine Verbindungshülsenanordnung zum Verbinden eines ersten rohrförmigen Querträgers mit einem zweiten rohrförmigen Querträger eines Instrumententafelträgers in einem Fahrzeug. Ein als gekrümmte Verbindungshülsenanordnung ausgebildetes Verbindungselement soll einen Querversatz zwischen zwei in der Verbindungshülsenanordnung aufgenommenen Querträgern ermöglichen.

Aus der DE 10 2008 045 914 B4 ist eine Rohranordnung mit einem ersten Rohr und mit zumindest einem zweiten Rohr bekannt, wobei das erste Rohr und das zweite Rohr relativ zueinander mit einem Versatz quer zur Längsrichtung der Rohre und mit einem teilweisen Überlappbereich in Längsrichtung der Rohre angeordnet sind, so dass ein erstes Ende des ersten Rohrs neben dem zweiten Rohr und ein zweites Ende des zweiten Rohrs neben dem ersten Rohr angeordnet ist. Die Rohranordnung weist weiterhin zumindest ein Verbindungselement auf, das das erste Rohr und das zweite Rohr im Überlappbereich miteinander fest verbindet.

Aus der EP 2 470 412 B1 ist ein Element zum Befestigen einer Querstrebe eines Armaturenbretts an einem Strukturelement eines Kraftfahrzeugs bekannt.

Nachteilig bei den bekannten Verfahren bzw. den bekannten Verbindungselementen ist, dass eine Verbindung an der Stirnwand, die quer zur Rohrlängsrichtung verläuft, die Rohre in eine Zwangslage bringt und zwar in Abhängigkeit von der Maßlichkeit bzw. dem Abstand der Beschnittkanten zueinander im Verbindungselement. Ein Toleranzausgleich von Herstellungstoleranzen der Rohre ist bei den bekannten Lösungen dagegen nicht möglich.

Ausgehend von den zuvor beschriebenen Nachteilen liegt der Erfindung die Aufgabe zugrunde, ein verbessertes Verfahren zum Verbinden von zwei Rohren eines Querträgers mit einem stabilen und vorteilhaft anzubringendem Verbindungselement zum Verbinden von zwei Rohren des Querträgers dahingehend weiterzubilden, dass die Rohranordnung im Bereich der Verbindung ausreichend biegesteif ist.

Diese Aufgabe wird gelöst durch ein Verfahren zum Verbinden von zwei Rohren eines Querträgers mit einem Verbindungselement zum Verbinden des ersten Rohres mit dem zweiten Rohr des Querträgers nach Anspruch 1.

Die Erfindung betrifft ein Verfahren zum Verbinden von zwei Rohren eines Querträgers für ein Fahrzeug, wobei ein Verbindungselement zum Verbinden eines ersten Rohres mit einem zweiten Rohr eines Querträgers für ein Fahrzeug, wobei das Verbindungselement wenigstens eine Längswand aufweist, an welche sich wenigstens eine, vorzugsweise senkrecht zur Längswand angeordnete Querwand anschließt.

Erfindungsgemäß weist die wenigstens eine Querwand an einem ersten Ende einen, vorzugsweise an die Umfangskontur des ersten Rohres angepassten Rand bzw. Randbereich auf, welcher für eine, vorzugsweise drehbewegliche Anordnung des Verbindungselements zumindest teilumfänglich an dem Außenumfang des ersten Rohres anliegt und an einem ersten Ende der Längswand ein Abschnitt vorgesehen ist, welcher in Montagestellung des Verbindungselements mit dem zweiten Rohr verbindbar, vorzugsweise verschweißbar bzw. verbunden bzw. verschweißt ist.

Mit anderen Worten ist der Abschnitt am ersten Ende der Längswand mit dem zweiten Rohr verbindbar und das Verbindungselement kann im Bereich eines dem ersten Ende der Längswand in Längsrichtung gegenüberliegenden zweiten Ende der Längswand, insbesondere mit wenigstens einer Querwand am ersten Rohr anliegen.

Im Sinne der vorliegenden Erfindung ist der Begriff "Rohr" allgemein zu verstehen, d.h. es kann eine beliebige Querschnittsform aufweisen, die beispielsweise rund, eckig oder oval sein kann. Des Weiteren versteht es sich, dass bei dem erfindungsgemäßen Querträger das erste Rohr und das zweite Rohr gleiche oder unterschiedliche Querschnittsformen und/oder Querschnittsgrößen aufweisen können.

Ferner können das erste Rohr und/oder das zweite Rohr nicht nur einen in Längsrichtung gesehen geraden Verlauf, sondern auch eine oder mehrere Biegungen aufweisen. Außerdem können die Rohre im Bereich ihrer Verbindung anstatt parallel zueinander auch schräg zueinander verlaufen.

Beide Rohre stehen räumlich in einem bestimmten Abstand zueinander. Aufgrund des Herstellungsprozesses schwankt dieser Abstand im Bereich der Toleranz. Um beide Rohre trotz der Herstellungstoleranz auf Position zu halten, ist das Verbindungselement so konzipiert, dass es diese Schwankung aufnehmen kann ohne die beiden Rohre in eine Zwangslage zu bringen.

Gegenüber dem Stand der Technik ist es erfindungsgemäß vorteilig, dass jede Stirnwand, d.h. der das Rohr umgreifende Abschnitt des Verbindungselements, an einem einzigen Rohr angeordnet, insbesondere verschweißt ist, nicht dagegen an beiden Rohren, wie im Stand der Technik. Durch diese Ausgestaltung werden die aufgezeigten Nachteile vermieden. Denn jeder Teil des Verbindungselements kann zunächst auf einem der Rohre positioniert und anschließend durch Drehen bis zur Auflage zum gegenüberliegenden Rohr in Kontakt gebracht werden.

Aufgrund der Anordnung der ersten und zweiten Stirnwand in Querrichtung der Rohre ist ein Ausgleich von Herstellungstoleranzen möglich. Denn hierdurch werden die Rohre nicht in eine Zwangslage gebracht, welche einen Toleranzausgleich verhindern würde.

Die sogenannte Stirnwand ist in Rohrlängsrichtung angeordnet und mit beiden Rohren verbunden. Zudem sind alle drei Kanten eines Knoten- bzw. Verbindungselementes nur mit einem Rohr verbunden. Beim Stand der Technik sind dagegen in der Regel sechs Kanten an beiden Rohren angebunden.

Insgesamt gewährleistet das Verbindungselement einen Toleranzausgleich sowohl in Längsrichtung der Rohre als auch bezüglich des Abstandes zwischen den Rohren.

Gemäß einer ersten vorteilhaften Weiterbildung der Erfindung erstreckt sich die Längswand in Montagestellung des Verbindungselements von dem ersten Rohr bis zum zweiten Rohr und ist mit beiden Rohren verbindbar, insbesondere verschweißbar.

Um eine maximal stabile Verbindung zwischen den beiden Rohren zu realisieren, ist die stoffschlüssige Verbindung, insbesondere das Schweißen, an allen Kanten notwendig.

Jedes Knotenelement ist nur an einem der Rohre mit allen drei Kanten verbunden, auf dem gegenüberliegenden Rohr nur mit an einer Kante, d.h. mit einer Schweißnaht.

In einer vorteilhaften Weiterbildung der Erfindung sind die wenigstens eine Querwand und die Längswand stoffschlüssig miteinander verbunden, vorzugsweise verschweißt, insbesondere ist die wenigstens eine Querwand mit der Längswand einstückig ausgebildet. Hierdurch werden die Stabilität und die Biegesteifigkeit weiter erhöht, so dass die Sicherheit von Fahrzeuginsassen weiter verbessert wird. Auch werden das Herstellungsverfahren des Verbindungselements vereinfacht und somit die Herstellungskosten gesenkt.

Gemäß einer weiteren Variante ist die Längswand zwischen der ersten und einer von der ersten beabstandeten zweiten Querwand angeordnet.

Ferner ist es vorgesehen, dass das erste Ende der Querwand gegenüber von dem ersten Ende der Längswand am Verbindungselement angeordnet ist, es also im Bereich des zweiten Endes der Längswand vorgesehen sein kann.

Gemäß einer vorteilhaften Weiterbildung der Erfindung verkleinert sich die Breite der Querwand zu dem dem Rand gegenüberliegenden zweiten Ende der Querwand, insbesondere läuft die Breite zu diesem Ende hin aus. Auf diese Weise kann der Materialeinsatz möglichst gering gehalten werden, woraus in vorteilhafter Weise Gewichtseinsparungen der Bauteile möglich sind.

Es ist weiterhin denkbar, dass die Längswand an dem ersten Ende und an einem dem ersten gegenüberliegenden zweiten Ende jeweils mit einem der Rohre verbindbar ist, wobei das Verbindungselement im Bereich des zweiten Endes der Längswand zusätzlich mit wenigstens einer Querwand mit einem der Rohre verbindbar ist.

In einer Weiterbildung der Erfindung weist das Verbindungselement zwei Teilelemente, welche jeweils eine Längswand und wenigstens eine Querwand umfassen, vorzugsweise ist die Längswand jedes Teilelements zwischen der ersten und einer von der ersten beabstandeten zweiten Querwand angeordnet. Das Verbindungselement weist also zwei Teilelemente auf bzw. ist durch zwei Teilelemente gebildet. Dadurch wird der technische Vorteil einer besonders widerstandsfähigen Verbindung der Rohre erreicht.

Gemäß einer vorteilhaften Ausgestaltung der Erfindung ist vorgesehen, dass die wenigstens eine Querwand des ersten Teilelements den an die Umfangskontur des ersten Rohres angepassten Rand bzw. Randbereich und die wenigstens eine Querwand des zweiten Teilelements den an die Umfangskontur des zweiten Rohres angepassten Rand bzw. Randbereich aufweist, wobei die Ränder für eine vorzugsweise drehbewegliche Anordnung des Verbindungselements zumindest teilumfänglich an dem Außenumfang des ersten bzw. des zweiten Rohres anliegen.

Wie erwähnt, schwankt der Abstand der Rohre im Bereich der Toleranz. Um beide Rohre trotz der Herstellungstoleranz auf Position zu halten, ist das Verbindungselement so konzipiert, dass es diese Schwankung aufnehmen kann ohne die beiden Rohre in eine Zwangslage zu bringen. Jede Stirnwand, d.h. der das Rohr umgreifende Abschnitt des Verbindungselements, ist an einem einzigen Rohr angeordnet, insbesondere verschweißt. Jeder Teil des Verbindungselements wird zunächst auf einem der Rohre positioniert und anschließend durch Drehen bis zur Auflage zum gegenüberliegenden Rohr in Kontakt gebracht. Aufgrund der Anordnung der ersten und zweiten Stirnwand in Querrichtung der Rohre ist ein Ausgleich von Herstellungstoleranzen möglich.

Gemäß einer vorteilhaften Weiterbildung der Erfindung ist das erste Ende der Längswand des ersten Teilelements in Montagestellung des Verbindungselements mit dem zweiten Rohr und das erste Ende der Längswand des zweiten Teilelements in Montagestellung des Verbindungselements mit dem ersten Rohr verbindbar, vorzugsweise verschweißbar, insbesondere verbunden bzw. verschweißt.

In einer weiteren vorteilhaften Variante der Erfindung weist die Längswand wenigstens einen Abschnitt zum Verbinden mit wenigstens einem Rohr auf, mit welchem das Teilelement in Montagestellung an einem der Rohre zu liegen kommt. Das Verbindungselement kann am ersten Ende der Längswand lediglich mittels des Verbindungsabschnitts mit dem einen Rohr und am zweiten Ende mit einem Abschnitt und mit wenigstens einer Querwand am anderen Rohr verbunden sein. Auf diese Weise wird die Biegesteifigkeit weiter erhöht. Denkbar ist auch, dass der Verbindungsabschnitt zumindest auf einer Seite gegenüber der wenigstens einen Querwand des Teilelements vorsteht und insbesondere als Anschlag ausgebildet ist.

Gemäß einer vorteilhaften Ausgestaltung der Erfindung ist vorgesehen, dass das Verbindungselement im Wesentlichen aus Metall oder Kunststoff hergestellt ist.

Nach einer Weiterbildung der Erfindung weist wenigstens eines der Teilelemente wenigstens eine geometrische Ausprägung zur Erhöhung der Biegesteifigkeit des Verbindungselements auf, wobei die wenigstens eine geometrische Ausprägung vorzugsweise als Sicke ausgebildet ist.

Durch diese geometrischen Ausprägungen wird die Biegesteifigkeit, insbesondere die Querwandversteifung des Verbindungselements insgesamt weiter erhöht. Für die die Position, die geometrische Auslegung und die Anzahl der Sicken sind zahlreiche Varianten zur Erhöhung der Biegesteifigkeit denkbar. Auch ist es denkbar lediglich nur an einem Teilelement derartige Ausprägungen vorzusehen oder an beiden.

Ein erster unabhängiger Gedanke der Erfindung betrifft einen Querträger für ein Fahrzeug mit wenigstens einem ersten Rohr und einem zweiten Rohr und mit einem Verbindungselement zum Verbinden des ersten Rohrs mit dem zweiten Rohr, insbesondere mit einem oben beschriebenen Verbindungselement.

Gemäß einem ersten vorteilhaften Aspekt des erfindungsgemäßen Querträgers weist das Verbindungselement Teilelemente auf, welche miteinander gefügt, insbesondere verschweißt sind und/oder wobei wenigstens eine Querwand der Teilelemente mit den Rohren gefügt, insbesondere an die Rohre angeschweißt ist.

Gemäß einer weiteren vorteilhaften Ausgestaltung ist vorgesehen, dass in Montagestellung die Längs- und zwei Querwände der beiden Teilelemente des Verbindungselements in einer Schnittebene, die zwischen den beiden Rohren und parallel zur Längsrichtung der Rohre verläuft, die Form eines Mehrkantprofils, insbesondere eines Vierkantprofils oder eines Fünfecks bilden.

Hierbei sei es besonders vorteilhaft, dass insgesamt ein schlankeres Design des Verbindungselements gewährleistet ist, was insbesondere Bauraumvorteile mit sich bringt. Ferner ist aufgrund der zusätzlichen Schweißnähte bei einem Fünfkantprofil gegenüber einem Vierkantprofil eine bessere Seiten- bzw. Quersteifigkeit gegeben.

Gemäß einer vorteilhaften Weiterbildung der Erfindung sind die jeweiligen Querwände der beiden Teilelemente in Montagestellung ineinander oder versetzt zueinander angeordnet. Zudem können die Querwände der jeweiligen Teilelemente in dem Bereich, in dem die Teilelemente ineinander angeordnet sind oder in dem Bereich, in dem die beiden Teilelemente versetzt angeordnet sind, miteinander verbunden, insbesondere verschweißt sein.

Eine besonders vorteilhafte Weiterbildung der Erfindung sieht vor, dass das erste und zweite Teilelement des Verbindungselements sowohl mit dem ersten Rohr als auch mit dem zweiten Rohr stoffschlüssig verbunden, insbesondere verschweißt sind, wodurch die Biegesteifigkeit des Querträgers weiter erhöht wird.

Gemäß einer vorteilhaften Ausgestaltung der Erfindung sind das erste Rohr und das zweite Rohr relativ zueinander mit einem Versatz quer zur Längsrichtung der Rohre und in Längsrichtung der Rohre mit einem sich über eine Teillänge des ersten Rohres und über eine Teillänge des zweiten Rohres erstreckenden Überlappbereich angeordnet, so dass ein erstes Ende des ersten Rohres neben dem zweiten Rohr und ein zweites Ende des zweiten Rohres neben dem ersten Rohr angeordnet ist.

Die Erfindung betrifft ein Verfahren zum Verbinden von zwei Rohren eines, insbesondere oben beschriebenen Querträgers für ein Fahrzeug, wobei ein Verbindungselement, insbesondere wie oben beschrieben wurde, drehbeweglich auf das erste Rohr aufgesetzt und um das erste Rohr gedreht wird, bis ein Anschlag des Verbindungselement am zweiten Rohr zu liegen kommt und das Verbindungselement zumindest im Bereich des Anschlages mit dem zweiten Rohr fest verbunden, insbesondere verschweißt wird.

Gemäß einer vorteilhaften Weiterbildung der Erfindung wird das Verbindungselement mit dem ersten Rohr fest verbunden, insbesondere verschweißt, nachdem es mit dem Anschlag am zweiten Rohr zu liegen kommt.

Nach einer Variante der Erfindung weist das Verbindungselement zwei Teilelemente auf, wobei das erste Teilelement drehbeweglich auf das erste Rohr und das zweite Teilelemente drehbeweglich auf das zweite Rohr aufgesetzt und gegenüber dem jeweiligen Rohr gedreht werden, bis ein Anschlag des ersten Teilelements mit dem zweiten Rohr und ein Anschlag des zweiten Teilelements mit dem ersten Rohr in Kontakt kommt, wobei das Verbindungselement zumindest an diesen Kontaktstellen mit dem ersten und zweiten Rohr verbunden, insbesondere verschweißt wird.

Dabei kann das Verbindungselement, insbesondere ein erstes Teilelement des Verbindungselements auf das eine Rohr aufgesteckt und in Richtung des zweiten Rohres bis zum Kontakt mit dem zweiten Rohr gedreht werden. Nachdem das erste Teilelement platziert wurde, wird das zweite Teilelement gleichermaßen erst auf das gegenüberliegende, zweite Rohr positioniert und bis zum Kontakt mit dem ersten Rohr gedreht. Dabei können die Teilelemente als U-Schalen ineinander oder versetzt zueinander eingesteckt werden.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung.

Dabei zeigen zum Teil schematisch:
- Figur 1: eine perspektivische Darstellung eines Verbindungselements,
- Figur 2: eine perspektivische Darstellung eines Teilelements des Verbindungselements gemäß Figur 1,
- Figur 3: eine perspektivische Darstellung eines weiteren Teilelements des Verbindungselements gemäß Figur 1,
- Figur 4: eine perspektivische Darstellung einer weiteren Ausführungsform des Verbindungselements und
- Figur 5: eine perspektivische Darstellung eines Querträgers mit Rohren und Verbindungselement gemäß Figur 1.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

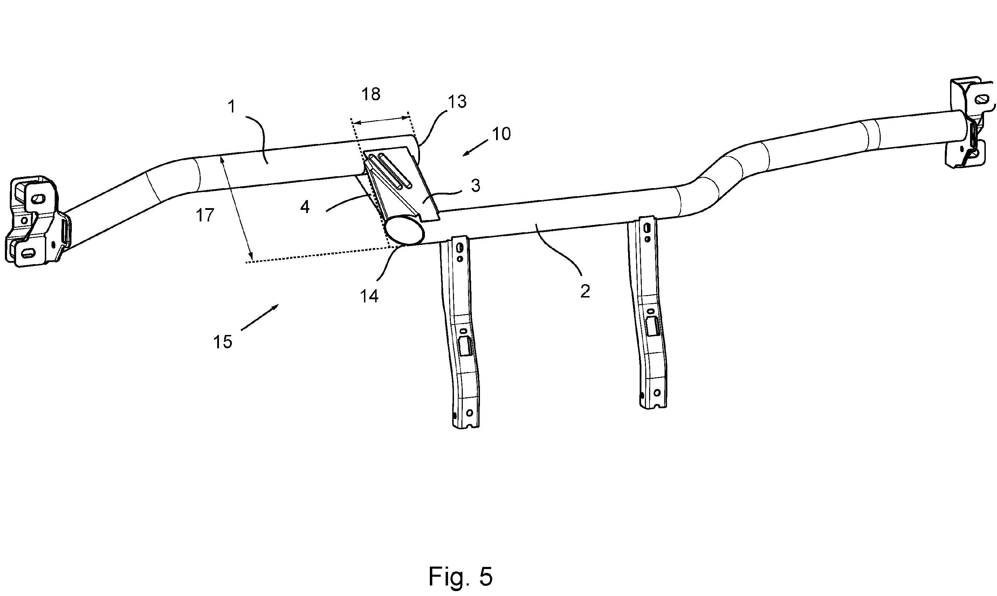

In Figur 5 ist ein Querträger 15 für ein Kraftfahrzeug dargestellt. Ein solcher Querträger 15 kann als Teil einer Kraftfahrzeugkarosserie zwischen den sogenannten A-Säulen des Kraftfahrzeugs im Bereich unterhalb der Windschutzscheibe, etwa horizontal verlaufend, angeordnet sein. Der vorliegende Querträger 15 dient in der Regel zur Befestigung einer Instrumententafel, wobei der Querträger 15 die Instrumententafel außerdem versteift. Zusätzlich zur Aussteifung der Instrumententafel muss der Querträger 15 aufgrund seiner Funktion als Karosseriebestandteil eine hohe Biegesteifigkeit besitzen, welche auch zur höheren Sicherheit des Kraftfahrzeuges und zu einem Schutz der Fahrzeuginsassen bei einem Unfall beiträgt.

Wenn der Querträger 15, wie aus Figur 5 weiter hervorgeht, eine Rohranordnung aufweist, die aus mehreren Rohren 1, 2 zusammengefügt ist, besteht grundsätzlich ein Problem in der biegesteifen Verbindung der einzelnen Rohre 1, 2 miteinander. Um eine solche biegesteife Verbindung zu realisieren, ist das erfindungsgemäße Verbindungselement 10 vorgesehen.

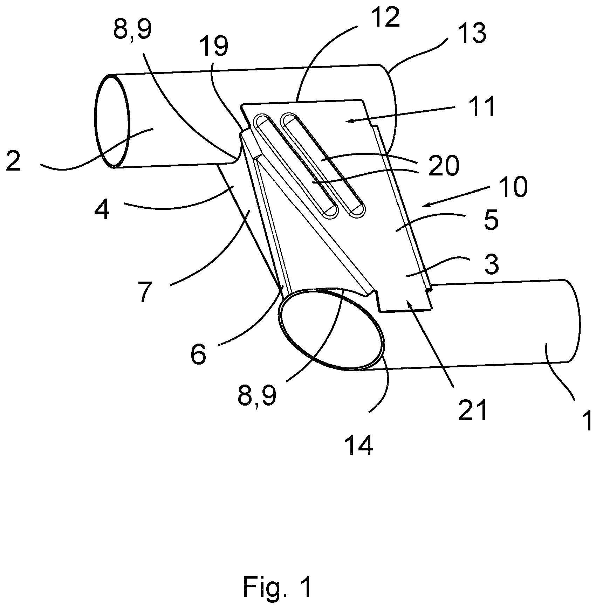

Figur 1 zeigt das Verbindungselement 10 zum Verbinden des ersten Rohres 1 mit dem zweiten Rohr 2 des Querträgers 15 für ein Fahrzeug. Vorliegend ist das Verbindungselement 10 im Wesentlichen aus Metall oder Kunststoff hergestellt.

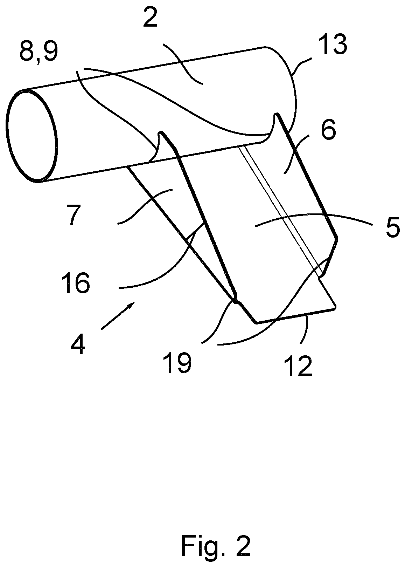

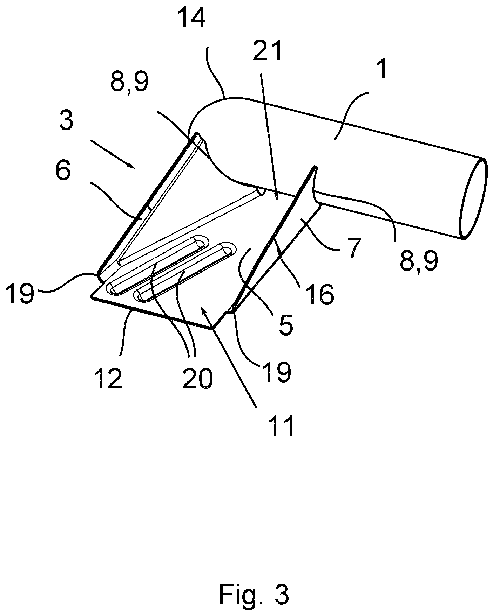

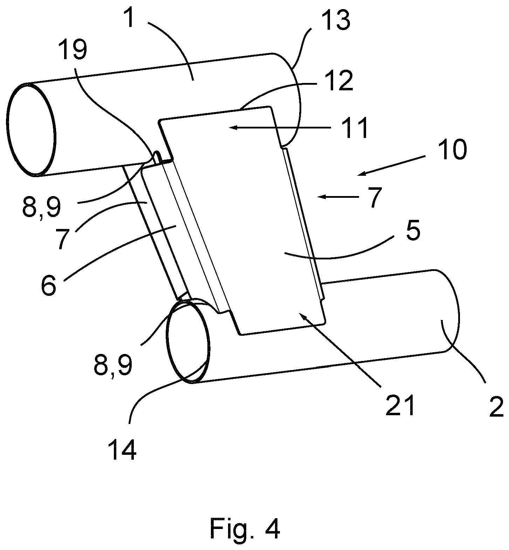

Die Figuren 2 und 3 zeigen jeweils eines der Rohre 1, 2 mit jeweils einem Teilelement 3, 4 des in den vorliegenden Ausführungsformen zweigeteilten Verbindungselements 10. In Figur 4 ist eine zweite Ausführungsform des Verbindungselements 10 dargestellt.

Im Sinne der vorliegenden Erfindung ist der Begriff "Rohr" allgemein zu verstehen, d.h. es kann eine beliebige Querschnittsform aufweisen, die beispielsweise rund, eckig oder oval sein kann. Des Weiteren versteht es sich, dass bei dem erfindungsgemäßen Querträger 15 das erste Rohr 1 und das zweite Rohr 2 gleiche oder unterschiedliche Querschnittsformen und/oder Querschnittsgrößen aufweisen können.

Ferner können das erste Rohr 1 und/oder das zweite Rohr 2 nicht nur einen in Längsrichtung gesehen geraden Verlauf, sondern auch eine oder mehrere Biegungen aufweisen, wie aus Figur 5 ebenfalls hervorgeht. Außerdem können die Rohre 1, 2 im Bereich ihrer Verbindung anstatt parallel zueinander auch schräg zueinander verlaufen.

Aus den Figuren 1 und 4, aber auch aus den Ansichten gemäß Figuren 2 und 3 ist weiter ersichtlich, dass jede Stirnwand, d.h. der das Rohr 1, 2 umgreifende Abschnitt des Verbindungselements 10, an einem einzigen Rohr 1, 2 angeordnet, insbesondere verschweißt ist, nicht dagegen an beiden Rohren 1, 2, wie im Stand der Technik. Aus diesem Grund kann jeder Teil des Verbindungselements 10 zunächst auf einem der Rohre 1, 2 positioniert und anschließend durch Drehen bis zur Auflage zum gegenüberliegenden Rohr 1, 2 in Kontakt gebracht werden.

Aufgrund der Anordnung der ersten und zweiten Stirnwand in Querrichtung der Rohre 1, 2 ist ein Ausgleich von Herstellungstoleranzen möglich. Denn hierdurch werden die Rohre 1, 2 nicht in eine Zwangslage gebracht, welche einen Toleranzausgleich verhindern würde.

Gemäß Figur 1 weist das Verbindungselement 10 eine Längswand 5 auf, an welche sich vorliegend etwa senkrecht zur Längswand 5 angeordnete Querwände 6, 7 anschließen. Die Längswand 5 ist zwischen der ersten 6 und der von der ersten beabstandeten zweiten Querwand 7 angeordnet. Die Längswand 5 erstreckt sich in Montagestellung des Verbindungselements 10 von dem ersten Rohr 1 bis zum zweiten Rohr 2 und ist mit beiden Rohren 1, 2 verbindbar, insbesondere verschweißbar. Das erste Ende 9 der Querwand 6, 7 ist gegenüber von dem ersten Ende 11 der Längswand 5 am Verbindungselement 10 angeordnet, also an einem zweiten Ende 21 der Längswand 5.

Die Querwände 6, 7 weisen an einem ersten Ende 9 einen, vorliegend an die Umfangskontur des ersten Rohres 1 angepassten Rand bzw. Randbereich 8 auf, welcher für eine drehbewegliche Anordnung des Verbindungselements 10 zumindest teilumfänglich an dem Außenumfang des ersten Rohres 1 anliegt.

Wie aus den Figuren 1 bis 4 weiter hervorgeht, ist an einem ersten Ende 11 der Längswand 5 ein Abschnitt 12 vorgesehen, welcher in Montagestellung des Verbindungselements 10 mit dem zweiten Rohr 2 verbindbar, insbesondere verschweißbar ist.

Beide Teilelemente 3, 4 weisen jeweils die beschriebene Längswand 5 und die Querwände 6, 7 auf. Bei einem der Teilelemente 3 sind die Querwände 6, 7 an die Umfangskontur des ersten Rohres 1 angepasst, bei dem weiteren Teilelement 4 sind die Querwände 6, 7 an die Umfangskontur des zweiten Rohres 2 angepasst. Im Sinne der Erfindung versteht es sich, dass die Querwände 6, 7 des Teilelements 3 statt an die Umfangskontur des ersten Rohres 1 alternativ an die Umfangskontur des zweiten Rohres 2 angepasst sein können. Gleiches gilt auch für das Teilelement 4. Die Bezeichnung der Rohre als erstes 1 und zweites 2 Rohr ist lediglich beispielhaft.

Das Verbindungselement 10 kann demnach am ersten Ende 11 der Längswand 5 lediglich mittels des Verbindungsabschnitts 12 mit dem einen Rohr 1, 2 und am zweiten Ende 21 der Längswand 5 mit einem Abschnitt und mit wenigstens einer Querwand 6, 7 am anderen Rohr 2, 1 verbunden sein.

Die Querwände 6, 7 und die Längswand 5 sind vorliegend stoffschlüssig miteinander verbunden, insbesondere verschweißt. Es kann auch vorgesehen sein, dass die Querwände 6, 7 mit der Längswand 5 einstückig ausgebildet sind.

Die Figuren 1, 2, 3 und 5 zeigen eine Ausführungsform des Verbindungselements 10, bei welcher die Breite 16 der Querwand 6, 7 zu dem dem Rand 8 gegenüberliegenden zweiten Ende 19 der Querwand 6, 7 verkleinert ist, insbesondere läuft die Breite 16 zu diesem Ende 19 hin aus.

Dagegen ist der Figur 4 eine zweite Ausführungsform des Verbindungselements 10 zu entnehmen, bei welcher die Breite der Querwände 6, 7 in großen Bereichen der Querwände 6, 7 etwa gleich bleibt, diese also nicht zu einem Ende hin ausläuft. Wie bei der ersten Ausführungsform des Verbindungselements 10 kann auch bei der zweiten Variante ein Rand bzw. Randbereich 8 der Querwände 6, 7 an die Umfangskontor des Rohres 1, 2 angepasst sein.

Insbesondere weisen die Querwände 6, 7 des ersten Teilelements 3 den an die Umfangskontur des ersten Rohres 1 angepassten Rand bzw. Randbereich 8 und die Querwände 6, 7 des zweiten Teilelements 4 den an die Umfangskontur des zweiten Rohres 2 angepassten Rand bzw. Randbereich 8 auf, wobei die Ränder bzw. Randbereiche 8 für die drehbewegliche Anordnung des Verbindungselements 10 zumindest teilumfänglich an dem Außenumfang des ersten 1 bzw. des zweiten Rohres 2 anliegen.

Wie erwähnt, schwankt der Abstand der Rohre 1, 2 im Bereich der Toleranz. Um beide Rohre 1, 2 trotz der Herstellungstoleranz auf Position zu halten, ist das Verbindungselement 10 so konzipiert, dass es diese Schwankung aufnehmen kann ohne die beiden Rohre 1, 2 in eine Zwangslage zu bringen. Aus diesem Grund ist die Stirnwand, d.h. der das Rohr 1, 2 umgreifende Abschnitt des Verbindungselements 10, an einem einzigen Rohr 1, 2 angeordnet, insbesondere mit diesem verschweißt.

Die Figuren 1 bis 4 zeigen weiter, dass das Verbindungselement 10 zwei Teilelemente 3, 4 aufweist, welche im vorliegenden Ausführungsbeispiel jeweils eine Längswand 5 und zwei Querwände 6, 7 umfassen. Im vorliegenden Ausführungsbeispiel ist die Längswand 5 jedes Teilelements 3, 4 zwischen der ersten 6 und einer von der ersten beabstandeten zweiten Querwand 7 angeordnet.

Das erste Ende 11 der Längswand 5 des ersten Teilelements 3 ist in Montagestellung des Verbindungselements 10 mit dem zweiten Rohr 2 und das erste Ende 11 der Längswand 5 des zweiten Teilelements 4 in Montagestellung des Verbindungselements 10 mit dem ersten Rohr 1 verbindbar, insbesondere verschweißbar.

Aus den Figuren 1 bis 4 geht weiter hervor, dass die Längswand 5 einen Abschnitt 12 zum Verbinden mit wenigstens einem Rohr 1, 2 aufweist, wobei der Verbindungsabschnitt 12 zumindest auf einer Seite gegenüber der Querwand 6, 7 des Teilelements 3, 4 vorsteht und als Anschlag ausgebildet ist, mit welchem das Teilelement 3, 4 in Montagestellung an einem der Rohre 1, 2 zu liegen kommt.

Aus Figur 5 geht der Querträger 15 für ein Fahrzeug mit dem ersten Rohr 1 und dem zweiten Rohr 2 und mit einem oben beschriebenen Verbindungselement 10 zum Verbinden des ersten Rohrs 1 mit dem zweiten Rohr 2 hervor.

Diese Figur 5 zeigt ebenfalls die Teilelemente 3, 4, welche miteinander gefügt, insbesondere verschweißt sind. Eine Querwand 6, 7 der Teilelemente 3, 4 ist mit den Rohren 1, 2 gefügt, insbesondere an die Rohre 1, 2 angeschweißt.

In Montagestellung bilden die Längs- 5 und zwei Querwände 6, 7 der beiden Teilelemente 3, 4 des Verbindungselements 10 in einer Schnittebene, die zwischen den beiden Rohren 1, 2 und parallel zur Längsrichtung der Rohre 1, 2 verläuft, die Form eines Mehrkantprofils.

Die jeweiligen Querwände 6, 7 der beiden Teilelemente 3, 4 sind in Montagestellung ineinander greifend oder versetzt zueinander angeordnet, wie Figuren 1 bis 4 weiter zeigen. Zudem können die Querwände 6, 7 der jeweiligen Teilelemente 3, 4 in dem Bereich, in dem die Teilelemente 3, 4 ineinander angeordnet sind oder in dem Bereich, in dem die beiden Teilelemente 3, 4 versetzt angeordnet sind, miteinander verbunden, insbesondere verschweißt sein.

Das erste und zweite Teilelement 3, 4 des Verbindungselements 10 ist sowohl mit dem ersten Rohr 1 als auch mit dem zweiten Rohr 2 stoffschlüssig verbunden, insbesondere verschweißt.

Figur 5 zeigt weiter, dass das erste Rohr 1 und das zweite Rohr 2 relativ zueinander mit einem Versatz 17 quer zur Längsrichtung der Rohre 1, 2 und in Längsrichtung der Rohre 1, 2 mit einem sich über eine Teillänge des ersten Rohres 1 und über eine Teillänge des zweiten Rohres 2 erstreckenden Überlappbereich 18 angeordnet sind, so dass ein erstes Ende 13 des ersten Rohres 1 neben dem zweiten Rohr 2 und ein zweites Ende 14 des zweiten Rohres 2 neben dem ersten Rohr 1 angeordnet ist.

Um die beiden Rohre 1, 2 des Querträgers 15 des Fahrzeugs miteinander zu verbinden, wird das oben beschriebene Verbindungselement 10 drehbeweglich auf das erste Rohr 1 aufgesetzt und um das erste Rohr 1 gedreht, bis ein Anschlag 12 des Verbindungselement 10 am zweiten Rohr 2 zu liegen kommt und das Verbindungselement 10 zumindest im Bereich des Anschlages 12 mit dem zweiten Rohr 1, 2 fest verbunden, insbesondere verschweißt wird. Das Verbindungselement 10 kann natürlich auch zunächst auf das zweite Rohr 2 aufgesetzt und um das zweite Rohr 2 gedreht werden, bis der Anschlag 12 am ersten Rohr 1 zu liegen kommt.

Es kann vorgesehen sein, dass das Verbindungselement 10 mit dem ersten Rohr 1 fest verbunden, insbesondere verschweißt wird, nachdem es mit dem Anschlag 12 am zweiten Rohr 2 zu liegen kommt.

Wie erwähnt, weist das Verbindungselement 10 vorliegend die zwei Teilelemente 3, 4 auf, wobei das erste Teilelement 3 drehbeweglich auf das erste Rohr 1 und das zweite Teilelement 4 drehbeweglich auf das zweite Rohr 2 aufgesetzt und gegenüber dem jeweiligen Rohr 1, 2 gedreht wird, bis der Anschlag 12 des ersten Teilelements 3 mit dem zweiten Rohr 2 und der Anschlag 12 des zweiten Teilelements 4 mit dem ersten Rohr 1 in Kontakt kommt. Dann kann das Verbindungselement 10 zumindest an diesen Kontaktstellen mit dem ersten 1 und zweiten Rohr 2 verbunden, insbesondere verschweißt werden.

Aus Figuren 1 und 3 geht weiter hervor, dass zumindest eines der Teilelemente, vorliegend das mit dem Bezugszeichen 3 gekennzeichnete Teilelement, eine geometrische Ausprägung in Form von zwei Sicken 20 aufweist. Durch diese Ausprägungen wird die Biegesteifigkeit, insbesondere die Querwandversteifung des Verbindungselements 10 insgesamt weiter erhöht. Die Position, die geometrische Auslegung und die Anzahl der Sicken sind bei dem hier gewählten Ausführungsbeispiel lediglich exemplarisch. Im Sinne der Erfindung sind zahlreiche weitere Varianten zur Erhöhung der Biegesteifigkeit denkbar.

### Bezugszeichenliste

- 1: Rohr
- 2: Rohr
- 3: erstes Teilelement
- 4: zweites Teilelement
- 5: Längswand
- 6: Querwand
- 7: Querwand
- 8: Rand
- 9: erstes Ende Querwand
- 10: Verbindungselement
- 11: erstes Ende Längswand
- 12: Abschnitt / Anschlag
- 13: erstes Ende Rohr
- 14: zweites Ende Rohr
- 15: Querträger
- 16: Breite der Querwand
- 17: Versatz
- 18: Überlappbereich
- 19: zweites Ende Querwand
- 20: Sicken
- 21: zweites Ende Längswand

## Patentansprüche

1. Verfahren zum Verbinden von zwei Rohren (1, 2) eines Querträgers (15) für ein Fahrzeug, wobei ein Verbindungselement (10) zum Verbinden des ersten Rohres (1) mit dem zweiten Rohr (2) des Querträgers (15) wenigstens eine Längswand (5) aufweist, an welche sich wenigstens eine, vorzugsweise senkrecht zur Längswand (5) angeordnete, Querwand (6, 7) anschließt, wobei die wenigstens eine Querwand (6, 7) an einem ersten Ende (9) einen an die Umfangskontur des ersten Rohres (1) angepassten Rand (8) aufweist, welcher für eine drehbewegliche Anordnung des Verbindungselements (10) zumindest teilumfänglich an dem Außenumfang des ersten Rohres (1) anliegt, wobei das Verbindungselement (10) drehbeweglich auf das erste Rohr (1) aufgesetzt und um das erste Rohr (1) gedreht wird, bis ein an einem ersten Ende (11) der Längswand (5) vorgesehener Anschlag (12) des Verbindungselement (10) am zweiten Rohr (2) zu liegen kommt und das Verbindungselement (10) zumindest im Bereich des Anschlages (12) mit dem zweiten Rohr (1, 2) fest verbunden, insbesondere verschweißt wird.

2. Verfahren nach Anspruch 1, **dadurch gekennzeichnet, dass** das Verbindungselement (10) mit dem ersten Rohr (1) fest verbunden, insbesondere verschweißt wird, nachdem es mit dem Anschlag (12) am zweiten Rohr (2) zu liegen kommt.

3. Verfahren nach Anspruch 1 oder 2, **dadurch gekennzeichnet, dass** das Verbindungselement (10) zwei Teilelemente (3, 4) aufweist, wobei das erste Teilelement (3) drehbeweglich auf das erste Rohr (1) und das zweite Teilelemente (4) drehbeweglich auf das zweite Rohr (2) aufgesetzt und gegenüber dem jeweiligen Rohr (1, 2) gedreht werden, bis ein Anschlag (12) des ersten Teilelements (3) mit dem zweiten Rohr (2) und ein Anschlag (12) des zweiten Teilelements (4) mit dem ersten Rohr (1) in Kontakt kommt, wobei das Verbindungselement (10) zumindest an diesen Kontaktstellen mit dem ersten (1) und zweiten Rohr (2) verbunden, insbesondere verschweißt wird.

4. Verfahren nach einem der vorherigen Ansprüche, **dadurch gekennzeichnet, dass** die wenigstens eine Querwand (6, 7) des ersten Teilelements (3) den an die Umfangskontur des ersten Rohres (1) angepassten Rand bzw. Randbereich (8) und die wenigstens eine Querwand (6, 7) des zweiten Teilelements (4) den an die Umfangskontur des zweiten Rohres (1) angepassten Rand bzw. Randbereich (8) aufweist, wobei die Ränder bzw. Randbereiche (8) für die drehbewegliche Anordnung des Verbindungselements (10) zumindest teilumfänglich an dem Außenumfang des ersten bzw. des zweiten Rohres (1) anliegen.

5. Verfahren nach einem der vorherigen Ansprüche, **dadurch gekennzeichnet, dass** das erste Ende (11) der Längswand (5) des ersten Teilelements (3) in Montagestellung des Verbindungselements (10) mit dem zweiten Rohr (2) und das erste Ende (11) der Längswand (5) des zweiten Teilelements (4) in Montagestellung des Verbindungselements (10) mit dem ersten Rohr (2) verbunden, vorzugsweise verschweißt wird.

6. Verfahren nach einem der vorherigen Ansprüche, **dadurch gekennzeichnet, dass** die Längswand (5) wenigstens einen Abschnitt (12) zum Verbinden mit wenigstens einem Rohr (1, 2) aufweist, wobei der Verbindungsabschnitt (12) vorzugsweise zumindest auf einer Seite gegenüber der wenigstens einen Querwand (6, 7) des Teilelements (3, 4) vorsteht und insbesondere als Anschlag ausgebildet ist, mit welchem das Teilelement (3, 4) in Montagestellung an einem der Rohre (1, 2) zu liegen kommt.

7. Verfahren nach einem der vorherigen Ansprüche, **dadurch gekennzeichnet, dass** wenigstens eines der Teilelemente (3, 4) wenigstens eine geometrische Ausprägung (20) zur Erhöhung der Biegesteifigkeit des Verbindungselements (10) aufweist, wobei die wenigstens eine geometrische Ausprägung (20) vorzugsweise als Sicke ausgebildet ist.

## Claims

1. Method for connecting two tubes (1, 2) of a crossmember (15) for a vehicle, wherein a connecting element (10) for connecting the first tube (1) to the second tube (2) of the crossmember (15) has at least one longitudinal wall (5), which is adjoined by at least one transverse wall (6, 7), which is arranged preferably perpendicularly in relation to the longitudinal wall (5), wherein, at a first end (9), the at least one transverse wall (6, 7) has a periphery (8) which is adapted to the circumferential contour of the first tube (1) and, for a rotatable arrangement of the connecting element (10), butts against at least part of the outer circumference of the first tube (1), wherein the connecting element (10) is positioned in a rotatable manner on the first tube (1) and is rotated about the first tube (1) until a stop (12) of the connecting element (10), the stop being provided at a first end (11) of the longitudinal wall (5), comes to rest on the second tube (2), and, at least in the region of the stop (12), the connecting element (10) is fixed, in particular welded, to the second tube (1, 2).

2. Method according to Claim 1, **characterized in that** the connecting element (10) is fixed, in particular welded, to the first tube (1) after it comes to rest on the second tube (2) by way of the stop (12).

3. Method according to Claim 1 or 2, **characterized in that** the connecting element (10) has two sub-elements (3, 4), wherein the first sub-element (3) is positioned in a rotatable manner on the first tube (1) and the second sub-element (4) is positioned in a rotatable manner on the second tube (2), and they are rotated in relation to the respective tube (1, 2) until a stop (12) of the first sub-element (3) comes into contact with the second tube (2) and a stop (12) of the second sub-element (4) comes into contact with the first tube (1), wherein the connecting element (10) is connected, in particular welded, to the first tube (1) and second tube (2) at least at these contact locations.

4. Method according to one of the preceding claims, **characterized in that** the at least one transverse wall (6, 7) of the first sub-element (3) has the periphery or peripheral region (8) adapted to the circumferential contour of the first tube (1) and the at least one transverse wall (6, 7) of the second sub-element (4) has the periphery or peripheral region (8) adapted to the circumferential contour of the second tube (1), wherein the peripheries or peripheral regions (8), for the rotatable arrangement of the connecting element (10), butt against at least part of the outer circumference of the first and of the second tube (1).

5. Method according to one of the preceding claims, **characterized in that** the first end (11) of the longitudinal wall (5) of the first sub-element (3) is connected, preferably welded, to the second tube (2) in the installed position of the connecting element (10), and the first end (11) of the longitudinal wall (5) of the second sub-element (4) is connected, preferably welded, to the first tube (2) in the installed position of the connecting element (10).

6. Method according to one of the preceding claims, **characterized in that** the longitudinal wall (5) has at least one portion (12) for connecting to at least one tube (1, 2), wherein the connecting portion (12) projects preferably at least on one side in relation to the at least one transverse wall (6, 7) of the sub-element (3, 4) and is designed in particular in the form of a stop, by way of which the sub-element (3, 4) comes to rest on one of the tubes (1, 2) in the installed position.

7. Method according to one of the preceding claims, **characterized in that** at least one of the sub-elements (3, 4) has at least one geometric embossed portion (20) for increasing the bending stiffness of the connecting element (10), wherein the at least one geometric embossed portion (20) is preferably designed in the form of a bead.

## Revendications

1. Procédé de liaison de deux tubes (1, 2) d'une traverse (15) pour un véhicule, dans lequel un élément de liaison (10) destiné à relier le premier tube (1) au deuxième tube (2) de la traverse (15) comporte au moins une paroi longitudinale (5), à laquelle est raccordée au moins une paroi transversale (6, 7), disposée de préférence perpendiculairement à la paroi longitudinale (5), l'au moins une paroi transversale (6, 7) présentant, à une première extrémité (9), un bord (8) adapté au contour périphérique du premier tube (1), lequel est appliqué au moins sur une partie de la périphérie extérieure du premier tube (1) pour une disposition mobile en rotation de l'élément de liaison (10), l'élément de liaison (10) étant mis en place de manière mobile en rotation sur le premier tube (1) et tourné autour du premier tube (1) jusqu'à ce qu'une butée (12) de l'élément de liaison (10), prévue à une première extrémité (11) de la paroi longitudinale (5), vienne au contact du deuxième tube (2), et l'élément de liaison (10) étant fixé de manière solidaire au deuxième tube (1, 2), notamment soudé, au moins dans la zone de la butée (12).

2. Procédé selon la revendication 1, **caractérisé en ce que** l'élément de liaison (10) est fixé de manière solidaire au premier tube (1), notamment soudé, après être venu au contact du deuxième tube (2) avec la butée (12).

3. Procédé selon la revendication 1 ou 2, **caractérisé en ce que** l'élément de liaison (10) comporte deux éléments partiels (3, 4), le premier élément partiel (3) étant mis en place de manière mobile en rotation sur le premier tube (1) et le deuxième élément partiel (4) étant mis en place de manière mobile en rotation sur le deuxième tube (2), puis tournés par rapport au tube respectif (1, 2) jusqu'à ce qu'une butée (12) du premier élément partiel (3) vienne en contact avec le deuxième tube (2) et qu'une butée (12) du deuxième élément partiel (4) vienne en contact avec le premier tube (1), l'élément de liaison (10) étant relié au premier tube (1) et au deuxième tube (2), notamment soudé, au moins au niveau de ces points de contact.

4. Procédé selon l'une quelconque des revendications précédentes, **caractérisé en ce que** l'au moins une paroi transversale (6, 7) du premier élément partiel (3) présente le bord ou la zone de bord (8) adapté(e) au contour périphérique du premier tube (1) et que l'au moins une paroi transversale (6, 7) du deuxième élément partiel (4) présente le bord ou la zone de bord (8) adapté(e) au contour périphérique du deuxième tube (1), les bords ou zones de bord (8) étant appliqués au moins sur une partie de la périphérie extérieure du premier tube ou du deuxième tube (1) pour la disposition mobile en rotation de l'élément de liaison (10).

5. Procédé selon l'une quelconque des revendications précédentes, **caractérisé en ce que** la première extrémité (11) de la paroi longitudinale (5) du premier élément partiel (3), dans la position de montage de l'élément de liaison (10), est reliée au deuxième tube (2), de préférence soudée à celui-ci, et que la première extrémité (11) de la paroi longitudinale (5) du deuxième élément partiel (4), dans la position de montage de l'élément de liaison (10), est reliée au premier tube (2), de préférence soudée à celui-ci.

6. Procédé selon l'une quelconque des revendications précédentes, **caractérisé en ce que** la paroi longitudinale (5) comporte au moins une section de liaison (12) destinée à être reliée à au moins un tube (1, 2), la section de liaison (12) faisant saillie, de préférence au moins sur un côté, par rapport à l'au moins une paroi transversale (6, 7) de l'élément partiel (3, 4), et étant notamment réalisée sous forme de butée, au moyen de laquelle l'élément partiel (3, 4) vient au contact de l'un des tubes (1, 2) dans la position de montage.

7. Procédé selon l'une quelconque des revendications précédentes, **caractérisé en ce qu'**au moins un des éléments partiels (3, 4) comporte au moins une forme géométrique (20) destinée à augmenter la rigidité en flexion de l'élément de liaison (10), l'au moins une forme géométrique (20) étant réalisée de préférence sous forme de nervure.
